# FASCICULE DE BREVET EUROPEEN

(11) **EP 2 121 315 B1**
(45) Date de publication et mention de la délivrance du brevet: **22.03.2017**
(21) Numéro de dépôt: 08716960.3
(22) Date de dépôt: 20.02.2008
(51) Int. Cl.: B32B 27/32, B32B 27/08, B32B 27/30, B32B 27/34

(54) **FILM BARRIÈRE À 5 COUCHES, PROCÉDÉ DE SCELLAGE, APPLICATION À L'EMBALLAGE DE PRODUIT ALIMENTAIRE**
FÜNFLAGIGE SPERRSCHICHTFOLIE, VERSIEGELUNGSVERFAHREN UND VERWENDUNG IN DER LEBENSMITTELVERPACKUNG
FIVE-LAYER BARRIER FILM, SEALING PROCESS AND USE THEREOF FOR PACKAGING FOOD

(30) Priorité: 21.02.2007 FR 0701218
(43) Date de publication de la demande: 25.11.2009
(73) Titulaire: Bollore, 29500 Ergué Gabéric (FR)
(72) Inventeur: BONETTI, Josyane, 51100 Reims (FR)
(74) Mandataire: Regimbeau
(86) Numéro de dépôt international: PCT/EP2008/052032
(87) Numéro de publication internationale: WO 2008/101940

(56) Documents cités:
- EP-A1- 0 561 428
- US-A- 5 679 422

## Description

L'invention concerne un film barrière constitué de cinq couches, comprenant une couche centrale de barrière à base d'EVOH.

Les films barrière sont utilisés dans le domaine de l'emballage de produits alimentaires sous atmosphère modifiée.

A cet effet, l'EVOH (copolymère d'éthylène - alcool vinylique) est connu pour ses bonnes propriétés d'imperméabilité au gaz, notamment à l'oxygène.

Pour assurer l'étanchéité de l'emballage, le film barrière doit pouvoir être scellé par chauffage.

On prévoit donc une couche de scellement pour l'une et/ou l'autre des couches extérieures du film.

Une couche intermédiaire est prévue pour faire adhérer chaque couche extérieure à la couche de barrière et assurer une résistance à la délamination du film.

Une telle structure à cinq couches permet de réaliser des films de faible épaisseur avec un faible coût de matières par rapport aux films à six, sept couches et plus.

On connaît différents films barrière à cinq couches.

Le document EP-A-561 428 décrit un film selon le préambule de la revendication 1.

Le document EP-B-217 596 concerne un film comportant :
- une couche d'âme contenant un mélange d'EVOH et de polyamide,
- deux couches intérieures adhésives de polymère modifié par acide ou anhydride d'acide,
- deux couches extérieures comprenant un mélange à trois composants de LLDPE, LMDPE et EVA.

Le document EP-B-881 966 concerne un film ayant
- une couche d'âme ayant de l'EVOH,
- deux couches extérieures dont au moins l'une contient un mélange de trois composants :
   -- un composant A de copolymère d'éthylène et d'α-oléfine homogène ou hétérogène de densité comprise entre 0,915 et 0,925 g/cm³,
   -- un composant B de copolymère d'éthylène et d'α-oléfine homogène ou hétérogène de densité supérieure ou égale à 0,925 g/cm³,
   -- un composant C de copolymère d'éthylène et d'α-oléfine homogène ou hétérogène de densité inférieure ou égale à 0,915 g/cm³,
   - deux couches adhésives entre la couche d'âme et les couches extérieures.

Le document EP-B-369 808 concerne un film comprenant :
- une couche de thermoscellement en VLDPE de moins de 920 kg/m³,
- une couche de barrière en PVDC ou EVOH,
- une couche extérieure thermoplastique, choisie parmi le LLDPE de plus de 920 kg/m³, le PE linéaire haute densité, les copolymères d'EVA, les copolymères d'éthylène et d'alkyl acrylate de 1 à 8 atomes de carbone, les copolymères d'éthylène et d'acide acrylique et les polymères ionomériques,
- une couche intermédiaire de VLDPE entre la couche de barrière et la couche extérieure thermoplastique,
- une couche thermoplastique additionnelle entre la couche de thermoscellement en VLDPE et la couche de barrière, choisie parmi le LLDPE de plus de 920 kg/m³, le PE linéaire haute densité, les copolymères d'EVA, les copolymères d'éthylène et d'alkyl acrylate de 1 à 8 atomes de carbone, les copolymères d'éthylène et d'acide acrylique et les polymères ionomériques.

Les films barrière doivent satisfaire à de nombreuses exigences.

Les scellages doivent avoir une certaine résistance mécanique pour permettre la manipulation et le stockage du produit emballé.

On souhaite que ces scellages puissent être effectués par machine à relativement basse température, pour pouvoir augmenter les cadences des postes de scellage sur une chaîne d'emballage et faire des économies d'énergie.

Lorsque le film doit passer dans des fours de rétraction, le retrait libre du film doit être grand à basse température, pour préserver les aliments emballés, écourter ce temps de passage dans ces fours et améliorer la productivité.

Les scellages doivent être thermorésistants à des fins de pasteurisation pour permettre le passage du film au bain-marie à 85 °C pendant une heure et demie sans fragiliser la tenue des scellages.

Lorsque l'on déballe le produit alimentaire, on doit pouvoir peler le film au niveau des scellages.

Ainsi, les scellages doivent être résistants, mais néanmoins pelables lors de l'ouverture par l'utilisateur.

Les films connus indiqués ci-dessus ne remplissent pas ou seulement en partie l'une ou l'autre de ces exigences.

L'invention vise à obtenir un film barrière satisfaisant à ces exigences, en particulier en ce qui concerne le scellage.

A cet effet, un premier objet de l'invention est un film barrière constitué de cinq couches superposées selon la revendication 1.

Suivant d'autres caractéristiques de l'invention :
- le premier copolymère du deuxième mélange est du LLDPE.
- la proportion du premier copolymère, formé par exemple par du LLDPE, par rapport au poids de sa couche extérieure est supérieure ou égale à 40 %.
- la proportion du deuxième copolymère par rapport au poids de sa couche extérieure est supérieure ou égale à 35 %.
- chaque couche extérieure contient ledit deuxième mélange de copolymères d'éthylène et d'α-oléfines.
- la couche barrière a une épaisseur supérieure ou égale à 4 micromètres.

Le film est par exemple symétrique par rapport à la couche centrale de barrière.

Dans un mode de réalisation, le premier mélange de la couche de barrière contient au minimum 80 % en poids d'EVOH, et de préférence au minimum 90% en poids d'EVOH.

Dans un mode de réalisation, le premier mélange de la couche de barrière comprend du copolyamide 6 / 6-6. Par exemple, le premier mélange est de 90 % en poids d'EVOH et de 10 % en poids de copolyamide 6 / 6-6.

Dans un autre mode de réalisation, le premier mélange de la couche de barrière comprend du terpolyamide 6 / 6-6 / 12. La proportion du terpolyamide 6 / 6-6 / 12 dans le premier mélange de la couche de barrière peut être inférieure à 9 %. Par exemple, le premier mélange est de 92 % en poids d'EVOH et de 8 % en poids de terpolyamide 6 / 6-6 / 12.

Le LLDPE est le polyethylène linéaire de basse densité, c'est-à-dire de densité inférieure ou égale à 0,925 g/cm³ et supérieure ou égale à 0,915 g/cm³.

Le LLDPE-g-MAH est le LLDPE greffé par anhydride maléique.

Le LDPE est un homopolymère basse densité de l'éthylène.

L'une et ou l'autre des couches intermédiaires comprend du polyéthylène greffé par anhydride maléique, tel que par exemple du LLDPE greffé par anhydride maléique. Chaque couche intermédiaire a une épaisseur d'au moins 2 micromètres.

Dans un mode de réalisation, le pourcentage d'épaisseur des couches par rapport à l'épaisseur totale du film est le suivant :
30%/10%/20%/10%/30%.

L'invention sera mieux comprise à la lecture de la description qui va suivre, donnée uniquement à titre d'exemple de réalisation non limitatif en référence aux dessins annexés, sur lesquels :
- la figure 1 est un diagramme montrant la valeur de la résistance d'un scellage effectué sur un film suivant l'invention en fonction de la température, et
- la figure 2 est un diagramme montrant la valeur du taux de rétraction d'un film suivant l'invention en fonction de la température.

Un exemple de réalisation du film suivant l'invention, appelé ci-dessous exemple 1, a la constitution suivante :
- couche de barrière de 5 micromètres d'épaisseur, formée de 90 % en poids d'un EVOH ayant une densité de 1,14 g/cm³ et un point de fusion de 161 °C à 165 °C et de 10 % en poids d'un copolyamide 6 / 6-6 ayant une densité d'environ 1,13 g/cm³ et un point de fusion à 192 °C,
- deux couches intermédiaires de 2,5 micromètres d'épaisseur chacune, formées chacune d'un LLDPE-g-MAH, ayant une densité de 1,14 g/cm³ et un point de fusion à 161 °C,
- deux couches extérieures de 7,5 micromètres d'épaisseur chacune, formées de 46 % en poids d'un LLDPE ayant une densité de 0,916 g/cm³ et un point de fusion à 122 °C, de 40 % en poids d'un copolymère métallocène d'éthylène et d'α-oléfine ayant une densité de 0,902 g/cm³ et un point de fusion à 95°C, de 8 % en poids d'une composition antibuée et de 6 % en poids d'un agent d'anti-blocage.

La composition antibuée est un mélange maître ayant 10% d'un agent antibuée sur un support LDPE, c'est-à-dire que les 8 % de composition antibuée ajoutée apportent 0,8 % d'agent anti-buée actif et 7,2% de LDPE support à 0,920 g/cm³ en poids dans la couche.

La composition d'anti-blocage est un mélange maître ayant 5 % de silice synthétique sur un support LDPE, c'est-à-dire que les 6 % de composition d'anti-blocage ajoutée apportent 0,3 % de silice synthétique et 5,7 % de LDPE support à 0,920 g/cm³ en poids dans la couche.

Ce film est fabriqué par exemple par un procédé double - bulle au cours duquel une gaine cylindrique est produite, ainsi que cela est connu par l'homme du métier. Le procédé double-bulle se déroule de la manière suivante : une première gaine cylindrique, appelée primaire, est trempée dans de l'eau pour être refroidie, puis convoyée en hauteur, par exemple à 20 mètres de hauteur. Elle est ensuite réchauffée dans des fours pour atteindre une température déterminée d'orientation. Puis, la gaine est gonflée par de l'air injecté par le bas. La bulle ainsi obtenue est fermée par le bas par des pinces (« nipp » en anglais) et est coupée sur deux côtés par deux lames pour obtenir deux films séparés, qui sont enroulés sur des rouleaux. Le film possède un sens longitudinal ou sens machine, qui est son sens d'enroulement sur le rouleau au cours de sa fabrication et un sens transversal parallèle à l'axe du rouleau.

Un exemple 2 de film comparatif est un film barrière de l'état de la technique ayant la référence BDF 8050 de la société Cryovac.

La méthode utilisée pour mesurer la résistance du scellage d'un film a été d'effectuer un scellage de deux éléments de ce film et d'évaluer sa résistance en pelage. Les scellages ont été réalisés à différentes températures par une même machine de type Brugger connue, avec une force exercée par les barres de scellage sur le film de 120 N pendant 0,7 seconde. On a mesuré la force de rupture en traction à vitesse constante (150 mm/minute) d'une éprouvette constituée de deux éléments de films, scellés perpendiculairement à leur longueur. La largeur de l'éprouvette est de 30 mm + ou - 0,5 mm. La force de rupture doit être ramenée à la largeur de l'éprouvette scellée. Les valeurs indiquées en N s'expriment précisément en Newton / 30 mm.

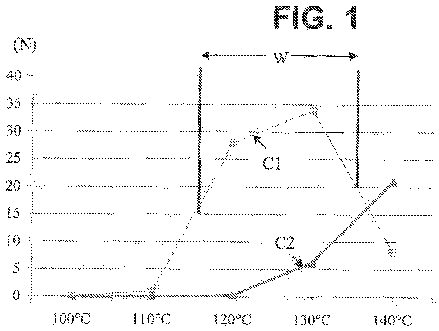

La figure 1 représente pour l'exemple 1 du film suivant l'invention selon la courbe C1 (formée des carrés) et pour l'exemple 2 du film de l'état de la technique selon la courbe C2 (formée des triangles) la résistance du scellage en N en ordonnée, mesurée pour différentes températures de scellage en °C en abscisse.

La résistance du scellage de l'exemple 1 de film selon l'invention est importante de 115°C à 135°C et est supérieure pour ces températures à celle de l'exemple 2 connu, formant ainsi à ces températures une fenêtre W de scellabilité très basse (définie par une résistance du scellage supérieure à un seuil d'initiation de 15 à 20 N), ce qui permettra de hautes cadences sur machines d'emballage. Dans cette fenêtre, les scellages sont pelables. La température d'initiation au scellage est inférieure à 120 °C.

Au-dessus de 135°C, le film se délamine.

La fenêtre de scellabilité de l'exemple 2 connu se situe entre 140 et 160-170°C. Dans cette fenêtre, l'exemple 2 se délamine systématiquement.
T._{SIT} = Température d'initiation au scellage = 115°C pour l'exemple 1 selon l'invention.
T._{SIT} = Température d'initiation au scellage = 140°C pour l'exemple 2 connu.

On a réalisé d'autres scellages sur une machine de type Flowpack (enveloppe thermo-soudée) de la société Ulma, puis on a mesuré leur résistance selon la méthode indiquée précédemment, ce qui a donné les résultats indiqués dans le tableau ci-dessous.

| Flowpack | Exemple 1 suivant l'invention | | Exemple 2 suivant l'état de la technique | |
|---|---|---|---|---|
| Température de barre de scellage (°C) | 125 ou 130 | | 160 | |
| Température de molette (°C) | 130 | | 170 | |
| Température de four de rétraction (°C) | 160 | | 160 | |
| Temps de séjour dans four de rétraction (en secondes) | 4 | | 7 | |
| Sens du scellage | SL = molette (1-SL) | ST = Barre (1-ST) | SL = molette (1-SL) | ST = Barre (1-ST) |
| Résistance de scellage (N) | 15 | 15 | 18 | 20 |
| Commentaires | Pelage propre | | Délaminage intercouches | |

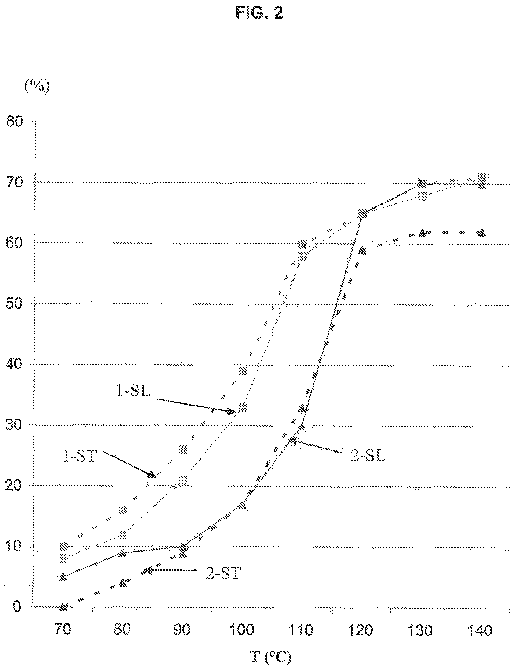

SL est le sens longitudinal du scellage. ST est le sens transversal du scellage. L'exemple 1 suivant l'invention peut être scellé à des températures très basses et passer très rapidement dans le four de rétraction du fait de son taux de rétraction élevé à basse température, ainsi que le montre la figure 2 (25% à 93°C contre 12% pour l'exemple 2). La température des barres de scellage peut donc être avantageusement diminuée d'une valeur comprise entre 35°C et 40°C. La température du four de rétraction du film suivant l'invention peut être de 160°C avec une augmentation de la vitesse de passage dans le four de 70 %. La vitesse de rétraction de l'exemple 1 était de 13 à 15 % par seconde, contre 9,5 % pour l'exemple 2.

La résistance des scellages de type Flowpack a également été mesurée dans les conditions de pasteurisation indiquées dans le tableau ci-dessous.

| | | | | |
|---|---|---|---|---|
| Sens du scellage | 1-SL = molette | 1-ST = Barre | 2-SL = molette | 2-ST = Barre |
| Résistance de scellage après 1h30mn dans bain-marie à 85°C (N) | 13.2 | 15 | 12.8 | 22.4 |
| Commentaires | Pelage propre | | Délaminage intercouches | |

Le passage au bain-marie pendant une heure et trente minutes n'a pas fragilisé les scellages des emballages FlowPack.

Les scellages de l'exemple 1 suivant l'invention sont pelables à basse température sans délamination du film, contrairement à l'exemple 2.

Suivant des caractéristiques de l'invention :
- la température d'initiation au scellage pour une force de rupture du scellage supérieure ou égale à 15 N / 30 mm est inférieure à 120°C ;
- la fenêtre de scellabilité pour une force de rupture du scellage supérieure ou égale à 10 N / 30 mm comprend la plage allant de 115 °C à 135 °C ;
- la fenêtre de scellabilité pour une force de rupture du scellage supérieure ou égale à 15 N / 30 mm comprend la plage allant de 115 °C à 135 °C ;
- la force de rupture de scellage du film est supérieure ou égale à 10 N / 30 mm après passage au bain-marie d'une heure et demie à 85 °C ;
- le module d'élasticité est supérieur ou égal à 700 MPa ;
- la perméabilité à l'oxygène à 0 % de taux d'humidité et 23°C est inférieure ou égale à 20 cm³/m²/24 heures ;
- la perméabilité à l'oxygène à 80 % de taux d'humidité et 23°C est inférieure ou égale à 25 cm³/m²/24 heures ;
- le film a une épaisseur totale inférieure ou égale à 30 micromètres.

Le module d'élasticité de l'exemple 1 est suffisamment grand entre 700 et 800 MPa, en ayant un film scellable à basse température.

Le taux de transmission d'oxygène (OTR) a été mesuré selon le tableau ci-dessous, pour une épaisseur de couche barrière mesurée à 4.7 micromètres pour l'exemple 1 et pour une épaisseur de couche barrière mesurée à 3.2 micromètres pour l'exemple 2.

| Perméabilité à l'oxygène (en cm³/m²/24 heures) | A 0% de taux d'humidité et 23°C | A 80% de taux d'humidité et 23°C |
|---|---|---|
| Exemple 1 | 16.6 | 20.8 |
| Exemple 2 | 23.8 | 28.5 |

Dans le cas où la couche de barrière de l'exemple 1 contient, au lieu de 10 % de copolyamide, 8 % de terpolyamide 6 / 6-6 / 12 ainsi qu'indiqué ci-dessus, le taux de transmission d'oxygène est le suivant pour une épaisseur de couche barrière mesurée à 4.1 micromètres.

| Perméabilité à l'oxygène (en cm³/m²/24 heures) | A 0% de taux d'humidité et 23°C | A 80% de taux d'humidité et 23°C |
|---|---|---|
| Exemple 1 avec terPA6/6-6/12 | 16.4 | 20 |

L'ajout du terPA permet, à plus faible taux que le coPA (8% contre 10%), d'obtenir une meilleure étirabilité du film (processabilité améliorée) sans dégrader la propriété barrière.

L'invention a également pour objet un procédé de scellage d'au moins deux parois d'un emballage, les parois étant constituées du film tel que décrit ci-dessus, comprenant au moins une étape d'application sur les parois d'au moins un élément saillant chauffant pour leur scellage,
caractérisé en ce que
la température de l'élément de scellage est inférieure ou égale à 130 °C.

Suivant des caractéristiques de l'invention :
- l'étape d'application de l'élément de scellage est suivie d'au moins une étape de passage dans au moins un four de rétraction avec un temps de séjour dans le four de rétraction inférieur ou égal à 4 secondes à une température du four de rétraction supérieure ou égale à 150 °C ;
- la vitesse de rétraction du film est supérieure ou égale à 10 % par seconde.

Un exemple d'application du procédé tel que décrit ci-dessus est le scellage d'un emballage d'un produit alimentaire sous atmosphère modifiée.

## Revendications

1. Film barrière constitué de cinq couches superposées, comprenant :
- une couche centrale de barrière comprenant un premier mélange d'un copolymère d'éthylène - alcool vinylique en majorité en poids et de polyamide,
- deux couches extérieures comprenant un deuxième mélange de copolymères d'éthylène et d'α-oléfines,
- deux couches adhésives entre respectivement la couche centrale et les deux couches extérieures,
le deuxième mélange de copolymères d'éthylène et d'α-oléfines d'au moins l'une des couches extérieures ne contenant qu'un premier copolymère d'éthylène et d'une α-oléfine ayant une densité inférieure ou égale à 0,925 g/cm³ et supérieure ou égale à 0,915 g/cm³ et un deuxième copolymère d'éthylène et d'une α-oléfine, la proportion du deuxième copolymère par rapport au poids de sa couche extérieure étant supérieure ou égale à 20 % et inférieure ou égale à 45 %,
**caractérisé en ce que**
le deuxième copolymère a une densité inférieure ou égale à 0,905 g/cm³ et est un copolymère métallocène d'éthylène et d'une α-oléfine.

2. Film suivant la revendication 1, **caractérisé en ce que** le premier copolymère du deuxième mélange est du LLDPE.

3. Film suivant l'une quelconque des revendications précédentes, **caractérisé en ce que** la proportion du premier copolymère par rapport au poids de sa couche extérieure est supérieure ou égale à 40 %.

4. Film suivant l'une quelconque des revendications précédentes, **caractérisé en ce que** la proportion du deuxième copolymère par rapport au poids de sa couche extérieure est supérieure ou égale à 35 %.

5. Film suivant l'une quelconque des revendications précédentes, **caractérisé en ce que** chaque couche extérieure contient ledit deuxième mélange de copolymères d'éthylène et d'α-oléfines.

6. Film suivant l'une quelconque des revendications précédentes, **caractérisé en ce que** le premier mélange de la couche de barrière contient au minimum 80 % en poids d'EVOH.

7. Film suivant l'une quelconque des revendications précédentes, **caractérisé en ce que** le premier mélange de la couche de barrière comprend du copolyamide 6 / 6-6.

8. Film suivant l'une quelconque des revendications 1 à 6, **caractérisé en ce que** le premier mélange de la couche de barrière comprend du terpolyamide 6 / 6-6 / 12.

9. Film suivant la revendication 8, **caractérisé en ce que** la proportion du terpolyamide 6 / 6-6 / 12 dans le premier mélange de la couche de barrière est inférieure à 9 %.

10. Film suivant l'une quelconque des revendications précédentes, **caractérisé en ce qu'**au moins l'une des couches intermédiaires comprend du polyéthylène greffé par anhydride maléique.

11. Film suivant l'une quelconque des revendications précédentes, **caractérisé en ce qu'**au moins l'une des couches intermédiaires comprend du LLDPE greffé par anhydride maléique.

12. Film suivant l'une quelconque des revendications précédentes, **caractérisé en ce que** chaque couche intermédiaire a une épaisseur d'au moins 2 micromètres.

13. Film suivant l'une quelconque des revendications précédentes, **caractérisé en ce que** la fenêtre de scellabilité pour une force de rupture du scellage supérieure ou égale à 10 N / 30 mm comprend la plage allant de 115 °C à 135 °C.

14. Film suivant l'une quelconque des revendications précédentes, **caractérisé en ce que** la fenêtre de scellabilité pour une force de rupture du scellage supérieure ou égale à 15 N / 30 mm comprend la plage allant de 115 °C à 135 °C.

15. Film suivant l'une quelconque des revendications précédentes, **caractérisé en ce qu'**il est symétrique par rapport à la couche centrale de barrière.

16. Film suivant l'une quelconque des revendications précédentes, **caractérisé en ce qu'**il a une épaisseur totale inférieure ou égale à 30 micromètres.

17. Film suivant l'une quelconque des revendications précédentes, **caractérisé en ce que** la couche barrière a une épaisseur supérieure ou égale à 4 micromètres.

18. Procédé de scellage d'au moins deux parois d'un emballage, les parois étant constituées du film suivant l'une quelconque des revendications précédentes, comprenant au moins une étape d'application sur les parois d'au moins un élément saillant chauffant pour leur scellage,
**caractérisé en ce que**
la température de l'élément de scellage est inférieure ou égale à 130 °C.

19. Procédé de scellage suivant la revendication 18, **caractérisé en ce que** l'étape d'application de l'élément de scellage est suivie d'au moins une étape de passage dans au moins un four de rétraction avec un temps de séjour dans le four de rétraction inférieur ou égal à 4 secondes à une température du four de rétraction supérieure ou égale à 150 °C.

20. Procédé de scellage suivant la revendication 19, **caractérisé en ce que** la vitesse de rétraction du film est supérieure ou égale à 10 % par seconde.

21. Application du procédé suivant l'une quelconque des revendications 18 à 20 au scellage d'un emballage d'un produit alimentaire sous atmosphère modifiée.

## Patentansprüche

1. Sperrschichtfolie, gebildet von fünf übereinanderliegenden Schichten, umfassend:
- eine zentrale Sperrschicht, umfassend ein erste Gemisch eines Copolymers von Ethylen - Vinylalkohol in Gewichtsmehrheit und von Polyamid,
- zwei Außenschichten, umfassend ein zweites Gemisch von Copolymeren von Ethylen und von α-Olefinen,
- zwei Haftschichten zwischen jeweils der zentralen Schicht und den zwei Außenschichten,
wobei das zweite Gemisch von Copolymeren von Ethylenen und von α-Olefinen mindestens einer der Außenschichten nur ein erstes Copolymer von Ethylen und von einem α-Olefin mit einer Dichte von unter oder gleich 0,925 g/cm³ und von über oder gleich 0,915 g/cm³ und ein zweites Copolymer von Ethylen und von einem α-Olefin enthält, wobei der Anteil des zweiten Copolymers in Bezug zum Gewicht ihrer Außenschicht über oder gleich 20 % und unter oder gleich 45 % beträgt,
**dadurch gekennzeichnet, dass**
das zweite Copolymer eine Dichte von unter oder gleich 0,905 g/cm³ hat und ein Metallocen-Copolymer von Ethylen und von einem α-Olefin ist.

2. Folie nach Anspruch 1, **dadurch gekennzeichnet, dass** das erste Copolymer des zweiten Gemischs LLDPE ist.

3. Folie nach einem der vorangehenden Ansprüchen, **dadurch gekennzeichnet, dass** der Anteil des ersten Copolymers in Bezug zum Gewicht ihrer Außenschicht über oder gleich 40 % beträgt.

4. Folie nach einem der vorangehenden Ansprüchen, **dadurch gekennzeichnet, dass** der Anteil des zweiten Copolymers in Bezug zum Gewicht ihrer Außenschicht über oder gleich 35 % beträgt.

5. Folie nach einem der vorangehenden Ansprüchen, **dadurch gekennzeichnet, dass** jede Außenschicht das zweite Gemisch von Copolymeren von Ethylen und von α-Olefinen enthält.

6. Folie nach einem der vorangehenden Ansprüchen, **dadurch gekennzeichnet, dass** das erste Gemisch der Sperrschicht mindestens 80 Gew.-% EVOH enthält.

7. Folie nach einem der vorangehenden Ansprüchen, **dadurch gekennzeichnet, dass** das erste Gemisch der Sperrschicht Copolyamid 6 / 6-6 umfasst.

8. Folie nach einem der Ansprüche 1 bis 6, **dadurch gekennzeichnet, dass** das erste Gemisch der Sperrschicht Terpolyamid 6 / 6-6 / 12 umfasst.

9. Folie nach Anspruch 8, **dadurch gekennzeichnet, dass** der Anteil des Terpolyamids 6 / 6-6 / 12 im ersten Gemisch der Sperrschicht unter 9 % beträgt.

10. Folie nach einem der vorangehenden Ansprüchen, **dadurch gekennzeichnet, dass** mindestens eine der Zwischenschichten von Maleinsäureanhydrid gepfropftes Polyethylen umfasst.

11. Folie nach einem der vorangehenden Ansprüchen, **dadurch gekennzeichnet, dass** mindestens eine der Zwischenschichten von Maleinsäureanhydrid gepfropftes LLDPE umfasst.

12. Folie nach einem der vorangehenden Ansprüchen, **dadurch gekennzeichnet, dass** jede Zwischenschicht eine Dicke von mindestens 2 Mikrometer hat.

13. Folie nach einem der vorangehenden Ansprüchen, **dadurch gekennzeichnet, dass** das Versiegelbarkeitsfenster für eine Bruchkraft der Versiegelung von über oder gleich 10 N / 30 mm den Bereich von 115 °C bis 135 °C umfasst.

14. Folie nach einem der vorangehenden Ansprüchen, **dadurch gekennzeichnet, dass** das Versiegelbarkeitsfenster für eine Bruchkraft der Versiegelung von über oder gleich 15 N / 30 mm den Bereich von 115 °C bis 135 °C umfasst.

15. Folie nach einem der vorangehenden Ansprüchen, **dadurch gekennzeichnet, dass** sie in Bezug auf die zentrale Sperrschicht symmetrisch ist.

16. Folie nach einem der vorangehenden Ansprüchen, **dadurch gekennzeichnet, dass** sie eine Gesamtdicke von unter oder gleich 30 Mikrometer hat.

17. Folie nach einem der vorangehenden Ansprüchen, **dadurch gekennzeichnet, dass** die Sperrschicht eine Dicke von über oder gleich 4 Mikrometer hat.

18. Versiegelungsverfahren von mindestens zwei Wänden einer Verpackung, wobei die Wände von einer Folie nach einem der vorangehenden Ansprüche gebildet sind, umfassend mindestens einen Schritt des Anwendens auf den Wänden von mindestens einem hervorstehenden Heizelement für deren Versiegelung,
**dadurch gekennzeichnet, dass**
die Temperatur des Versiegelungselements unter oder gleich 130 °C beträgt.

19. Versiegelungsverfahren nach Anspruch 18, **dadurch gekennzeichnet, dass** dem Schritt des Anwendens des Versiegelungselements mindestens ein Durchgangsschritt in mindestens einem Retraktionsofen mit einer Verweilzeit in dem Retraktionsofen von unter oder gleich 4 Sekunden bei einer Temperatur des Retraktionsofens von über oder gleich 150 °C folgt.

20. Versiegelungsverfahren nach Anspruch 19, **dadurch gekennzeichnet, dass** die Retraktionsgeschwindigkeit der Folie über oder gleich 10 % pro Sekunde beträgt.

21. Anwendung des Verfahrens nach einem der Ansprüche 18 bis 20 auf das Versiegeln einer Verpackung eines Lebensmittelprodukts unter modifizierter Atmosphäre.

## Claims

1. A barrier film made up of five superposed layers, comprising:
- a central barrier layer comprising a first blend of an ethylene-vinyl alcohol copolymer in majority by weight and of polyamide,
- two outer layers comprising a second blend of copolymers of ethylene and α-olefins,
- two adhesive layers between the central layer and the two outer layers, respectively,
wherein the second blend of copolymers of ethylene and α-olefins of at least one of the outer layers only contains a first copolymer of ethylene and of an α-olefin having a density less than or equal to 0.925 g/cm³ and greater than or equal to 0.915 g/cm³, and a second copolymer of ethylene and of an α-olefin, wherein the proportion of the second copolymer relatively to the weight of its outer layer is greater than or equal to 20% and less than or equal to 45%,
**characterized in that**
the second copolymer has a density less than or equal to 0.905 g/cm³ and is a metallocene copolymer of ethylene and of an α-olefin.

2. The film according to claim 1, **characterized in that** the first copolymer of the second blend is LLDPE.

3. The film according to any one of the preceding claims, **characterized in that** the proportion of the first copolymer relatively to the weight of the outer layer is greater than or equal to 40%.

4. The film according to any one of the preceding claims, **characterized in that** the proportion of the second copolymer relatively to the weight of its outer layer is greater than or equal to 35%.

5. The film according to any one of the preceding claims, **characterized in that** each outer layer contains said second blend of copolymers of ethylene and α-olefins.

6. The film according to any one of the preceding claims, **characterized in that** the first blend of the barrier layer contains at least 80% by weight of EVOH.

7. The film according to any one of the preceding claims, **characterized in that** the first blend of the barrier layer comprises copolyamide 6/6-6.

8. The film according to any one of claims 1 to 6, **characterized in that** the first blend of the barrier layer comprises terpolyamide 6/6-6/12.

9. The film according to claim 8, **characterized in that** the proportion of terpolyamide 6/6-6/12 in the first blend of the barrier layer is less than 9%.

10. The film according to any one of the preceding claims, **characterized in that** at least one of the intermediate layers comprises polyethylene grafted with maleic anhydride.

11. The film according to any one of the preceding claims, **characterized in that** at least one of the intermediate layers comprises LLDPE grafted with maleic anhydride.

12. The film according to any one of the preceding claims, **characterized in that** each intermediate layer has a thickness of at least 2 micrometers.

13. The film according to any one of the preceding claims, **characterized in that** the sealability window for a seal breaking force greater than or equal to 10 N/30mm comprises the range extending from 115°C to 135°C.

14. The film according to any one of the preceding claims, **characterized in that** the sealability window for a seal breaking force greater than or equal to 15 N/30mm comprises the range extending from 115°C to 135°C.

15. The film according to any one of the preceding claims, **characterized in that** it is symmetrical relatively to the central barrier layer.

16. The film according to any one of the preceding claims, **characterized in that** it has a total thickness less than or equal to 30 micrometers.

17. The film according to any one of the preceding claims, **characterized in that** the barrier layer has a thickness greater than or equal to 4 micrometers.

18. A method for sealing at least two walls of a package, the walls being made up of the film according to any one of the preceding claims, comprising at least one step for applying on the walls at least one heating protruding element for their sealing,
**characterized in that**
the temperature of the sealing element is less than or equal to 130°C.

19. The sealing method according to claim 18, **characterized in that** the step for applying the sealing element is followed by at least one step for passing into at least one shrinkage oven with a residence time in the shrinkage oven less than or equal to 4 seconds at a temperature of the shrinkage oven greater than or equal to 150°C.

20. The sealing method according to claim 19, **characterized in that** the shrinkage rate of the film is greater than or equal to 10% per second.

21. Application of the method according to any one of claims 18 to 20 for sealing a package of a food product under a modified atmosphere.
